# EUROPÄISCHE PATENTSCHRIFT

(11) **EP 1 636 083 B1**
(45) Veröffentlichungstag und Bekanntmachung des Hinweises auf die Patenterteilung: **29.08.2007**
(21) Anmeldenummer: 04737105.9
(22) Anmeldetag: 22.06.2004
(51) Int. Cl.: B62D 21/15, B62D 25/08, B62D 27/02, B62D 21/02, B23K 1/00

(54) **TRÄGER FÜR EINE FAHRZEUGKAROSSERIE**
SUPPORT FOR A VEHICLE BODY
SUPPORT POUR CARROSSERIE DE VEHICULE

(30) Priorität: 24.06.2003 AT 9722003
(43) Veröffentlichungstag der Anmeldung: 22.03.2006
(73) Patentinhaber: Voestalpine Stahl GmbH, 4020 Linz (AT)
(72) Erfinder: SCHMARANZER, Christian, 4072 Alkoven (AT); LEITNER, Alois, 4852 Weyregg am Attersee (AT)
(74) Vertreter: Hübscher, Helmut
(86) Internationale Anmeldenummer: PCT/AT2004/000213
(87) Internationale Veröffentlichungsnummer: WO 2004/113151

(56) Entgegenhaltungen:
- US-A- 3 202 793
- US-A- 3 341 680
- US-A1- 2002 079 722
- PATENT ABSTRACTS OF JAPAN Bd. 0072, Nr. 03 (M-241), 8. September 1983 (1983-09-08) -& JP 58 100978 A (MITSUBISHI JUKOGYO KK), 15. Juni 1983 (1983-06-15)

## Beschreibung

### Technisches Gebiet

Die Erfindung bezieht sich auf einen Träger für eine Fahrzeugkarosserie aus wenigstens zwei entlang ihrer Längsränder zu einem umfangsgeschlossenen Hohlprofil zusammengesetzten Blechprofilen, das zumindest zwei durch eine Verbindungsnaht stoffschlüssig miteinander verbundene Längsabschnitte aufweist.

### Stand der Technik

Zum Anpassen von Fahrzeugträgern an unterschiedliche Karosserielängen ist es aus der gattungsgemäßen DE 100 61 848 A1 bekannt, Hohlprofile einzusetzen, die aus zwei Längsabschnitten zusammengesetzt werden. Diese Längsabschnitte werden zu ihrer Verbindung ineinandergesteckt und im Überlappungsbereich miteinander verschweißt. Zur Aufnahme einer Stoßenergie kann das Hohlprofil mit Sollbiegestellen versehen werden, wobei jedoch der durch die Überlappung der Längsabschnitte bedingte Festigkeitssprung Schwierigkeiten macht, selbst wenn versucht wird, diesen Festigkeitssprung durch eine zur Längsachse des Trägers geneigt verlaufende Fügeebene zu mildern. Außerdem ist nicht nur der durch solche Träger aus Eisenwerkstoff bedingte Gewichtsanteil an der Fahrzeugkarosserie beachtlich, sondern auch die damit zusammenhängende Gewichtsverteilung über die Trägerlänge in vielen Fällen ungünstig. Aus diesen Gründen würde ein Träger einerseits aus einem Eisenwerkstoff und anderseits aus einem Aluminiumwerkstoff den Gewichts- und Belastungsanforderungen besser entsprechen. Blechprofile aus einem Eisenwerkstoff lassen sich allerdings mit Blechprofilen aus einem Aluminiumwerkstoff nicht ohne weiteres fügen.

Beim thermischen Verbinden eines Aluminiumwerkstoffes mit einem Eisenwerkstoff wird der Aluminiumwerkstoff im Fügebereich aufgeschmolzen, so daß das schmelzflüssige Aluminium den Eisenwerkstoff benetzt und sich nach der Abkühlung eine stoffschlüssige Verbindung ergibt. Im Übergangsbereich zwischen den Werkstoffen werden allerdings spröde intermetallische Phasen gebildet, die die Belastbarkeit der Verbindung maßgebend mitbestimmen. Um das Auftreten spröder intermetallischer Phasen im Bereich einer Verbindungsnaht zwischen einem Eisen- und einem Aluminiumwerkstoff weitgehend zu vermeiden, ist es bereits bekannt (US 3 202 793 A), den Eisenwerkstoff zumindest im Fügebereich mit einer Beschichtung auf Zinkbasis zu versehen, bevor ein Zusatzwerkstoff auf Aluminiumbasis zur Ausbildung einer Verbindungsnaht zwischen den stumpf stoßenden Blechteilen auf beiden Blechseiten schmelzmetallurgisch aufgetragen wird. Dieser Zusatzwerkstoff geht mit dem Aluminiumwerkstoff eine Schweißverbindung ein und dient als Lot für die Verbindung mit dem Eisenwerkstoff, wobei jedoch der Zusatzwerkstoff nicht in schmelzflüssigen Kontakt mit dem Eisenwerkstoff, sondern ausschließlich mit dem Beschichtungswerkstoff kommt, so daß aufgrund des gewählten Zusatzwerkstoffes auf Aluminiumbasis intermetallische Phasen weitgehend unterdrückt werden können. Die Festigkeit dieser Schweiß-Lötverbindungen ist aber unzureichend, selbst wenn zur Verbesserung der Festigkeit das Eisenblech im Verbindungsbereich mit Durchbrüchen versehen wird, um über den durch diese Durchbrüche durchtretenden Zusatzwerkstoff eine verbesserte Bindung des Zusatzwerkstoffes mit dem Eisenblech zu erhalten.

### Darstellung der Erfindung

Der Erfindung liegt somit die Aufgabe zugrunde, einen Träger für eine Fahrzeugkarosserie der eingangs geschilderten Art so auszugestalten, daß einerseits Aluminiumwerkstoffe und anderseits Eisenwerkstoffe jeweils ihren Werkstoffeigenschaften entsprechend eingesetzt werden können, um sowohl den Festigkeits- als auch den Gewichtsanforderungen vorteilhaft genügen zu können.

Die Erfindung löst die gestellte Aufgabe dadurch, daß eine der beiden Längsabschnitte aus einem Eisenwerkstoff und der andere Längsabschnitt des Hohlprofils aus einem Aluminiumwerkstoff bestehen und daß die eine Schweiß-Lötverbindung bildende Verbindungsnaht zwischen den stumpf stoßenden Längsabschnitten des Hohlprofils einen Zusatzwerkstoff auf Aluminiumbasis als Lot aufweist, das auf einer Beschichtung des Eisenwerkstoffes in einer zumindest der dreifachen Dicke dieses Eisenwerkstoffes entsprechenden Breite aufgebracht ist.

Zunächst bietet die Unterteilung des Hohlprofils des Trägers in zwei Längsabschnitte einerseits aus einem Eisenwerkstoff und anderseits aus einem Aluminiumwerkstoff den Vorteil, daß der dem Fahrgastraum zugeordnete Längsabschnitt des Trägers aus dem biegesteiferen Eisenwerkstoff bestehen kann, während der vom Fahrgastraum weiter entfernte Längsabschnitt aus Aluminiumwerkstoff aufgrund seiner geringeren Biegesteifigkeit geeignet ist, allenfalls auftretende Stoßenergien aufzunehmen und in Formänderungsarbeit umzusetzen, indem der Längsabschnitt des Trägers aus dem Aluminiumwerkstoff unter einer Verkürzung seiner Länge faltenbildend eingebeult wird. Dies gelingt aber nur, wenn über die Verbindungsnaht zwischen den beiden Längsabschnitten unterschiedlicher Werkstoffe die bei einer Stoßbelastung auftretenden Kräfte auch übertragen werden können. Zu diesem Zweck wird der das Lot für den Eisenwerkstoff bildende Zusatzwerkstoff auf Aluminiumbasis auf den Eisenwerkstoff beidseits in einer Breite aufgebracht, die zumindest der dreifachen Dicke des Blechprofils aus dem Eisenwerkstoff entspricht. Diese Bedingung gewährleistet, daß die für die Belastbarkeit der Verbindungsnaht kritischen Normalspannungen im Bereich der Lötzone zwischen dem Zusatzwerkstoff auf Aluminiumbasis und dem Eisenwerkstoff selbst bei einer plastischen Verformung der gefügten Blechzuschnitte in einem zulässigen Bereich bleiben, weil eben die Verbindungsgeometrie entsprechend gestaltet wird. Es können folglich im Nahtbereich zumindest die Festigkeitswerte eingehalten werden, die auch in den anschließenden Blechbereichen vorliegen. Durch das an sich bekannte Beschichten des Eisenwerkstoffes vorzugsweise mit einem Zink- oder Aluminiumwerkstoff wird außerdem die elektrochemische Potentialdifferenz zwischen der Beschichtung des Eisenwerkstoffes und dem Zusatzwerkstoff im Vergleich zur Potentialdifferenz zwischen dem Eisenwerkstoff und dem Zusatzwerkstoff auf Aluminiumbasis deutlich herabgesetzt, wodurch die Neigung zur Kontaktkorrosion entscheidend verringert wird. Darüber hinaus wird durch die Beschichtung des Eisenwerkstoffes im Fügebereich die Neigung zur Bildung spröder, intermetallischer Phasen verringert, was ebenfalls für die Festigkeit der Schweiß-Lötverbindung von Bedeutung ist.

Dazu kommt noch, daß mit der Ausbildung eines Längsabschnittes des Trägers aus einem Aluminiumwerkstoff eine deutliche Gewichtsverringerung verbunden ist. Die auf einen Längsabschnitt des Trägers beschränkte Verringerung des Gewichtes des Hohlprofils kann aber auch zur Verbesserung des Fahrverhaltens eines Kraftfahrzeuges ausgenützt werden. Wird nämlich bei einer Gewichtsentlastung des Heckbereiches eines frontgetriebenen Kraftfahrzeuges die Gewichtsverteilung über die Fahrzeuglänge zu ungunsten des Fahrverhaltens verlagert, so kann nunmehr durch eine Trägerausbildung mit einem über die angetriebene Vorderachse hinausragenden Längsabschnitt aus einem Aluminiumwerkstoff wieder eine vorteilhafte Gewichtsverteilung sichergestellt werden, ohne das Heckgewicht vergrößern zu müssen.

Um eine allmähliche Lastübernahme zwischen den unterschiedlichen Werkstoffen der Längsabschnitte des Trägers unter Vermeidung von übermäßigen Spannungsspitzen zu erreichen, kann der Längsabschnitt aus dem Eisenwerkstoff im Stoßbereich zumindest auf einer Seite mit einer Abschrägung versehen sein, so daß sich der tragende Querschnitt des Eisenwerkstoffes gegen den Aluminiumwerkstoff hin kontinuierlich verringert, während der tragende Querschnitt des Aluminiumwerkstoffes entsprechend zunimmt. Diese Abschrägung muß aber wie der übrige Fügebereich mit einer Beschichtung abgedeckt werden, um die werkstoffliche Anbindung zwischen dem Eisenwerkstoff und dem Zusatzwerkstoff auf Aluminiumbasis zu gewährleisten.

Zum Herstellen eines erfindungsgemäßen Trägers für eine Fahrzeugkarosserie können die zum Hohlprofil zu fügenden Blechprofile je aus zwei Zuschnitten bestehen, die den beiden Längsabschnitten des Hohlprofils entsprechen und einerseits aus einem Eisenwerkstoff und anderseits aus einem Aluminiumwerkstoff bestehen. Werden die ebenen Zuschnitte dieser Abschnitte aus dem Eisenwerkstoff und dem Aluminiumwerkstoff durch eine Schweiß-Lötverbindung in Form eines stumpfen Stoßes miteinander unter Verwendung eines Zusatzwerkstoffes auf Aluminiumbasis verbunden, der zur Ausbildung der Verbindungsnaht auf beiden Seiten des Zuschnittes aus dem Eisenwerkstoff unter einem Schmelzen auf einer Beschichtung des Eisenwerkstoffes in einer zumindest der dreifachen Dicke dieses Zuschnittes entsprechenden Breite aufgebracht wird, so können die durch die plastische Umformung bedingten Kräfte über die Verbindungsnaht zwischen den Zuschnitten übertragen werden, ohne eine Überlastung der Verbindungsnaht befürchten zu müssen. Aufgrund dieser Nahtausbildung können die gefügten, ebenen Zuschnitte jedes Blechprofils gemeinsam einer Kaltverformung unterzogen werden, was den Herstellungsaufwand erheblich verringert, weil die kaltverformten Blechprofile anschließend lediglich entlang ihrer Längsränder miteinander zum Hohlprofil des Trägers verbunden werden müssen, was durch eine stoffschlüssige oder formschlüssige Verbindung der aneinanderliegenden Längsrandflansche durchgeführt werden kann, also mit Hilfe von Fügetechniken, die vom jeweiligen Werkstoff der Längsabschnitte des Hohlprofils unabhängig sind.

Die den Stoßbereich zwischen den Zuschnitten der Blechprofile überbrückende Verbindungsnaht aus dem Zusatzwerkstoff bringt zwar eine Überhöhung des Stoßbereiches mit sich, doch spielt diese Überhöhung durch die beidseitige Verbindungsnaht für die spätere Umformung der stumpfgefügten Zuschnitte keine entscheidende Rolle, weil die Nahtüberhöhungen beispielsweise durch entsprechende Aussparungen im Formwerkzeug berücksichtigt werden können. Zur Verringerung der Nahtüberhöhungen kann aber auch die durch den Zusatzwerkstoff gebildete Verbindungsnaht zwischen den Zuschnitten der Blechprofilabschnitte vor der gemeinsamen Kaltverformung der gefügten Zuschnitte abgeflacht werden.

### Kurze Beschreibung der Zeichnung

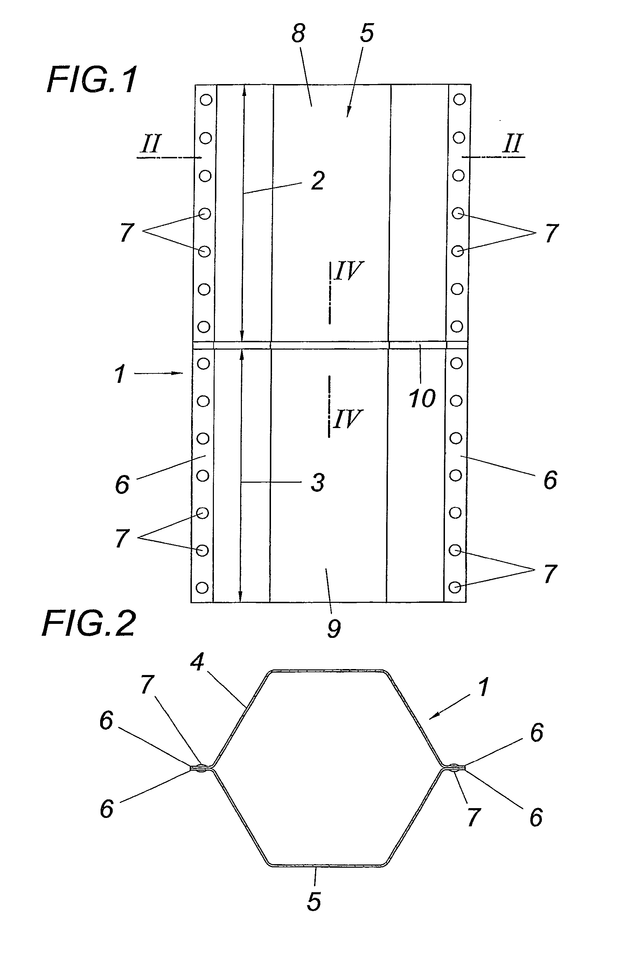

In der Zeichnung ist der Erfindungsgegenstand beispielsweise dargestellt. Es zeigen
- Fig. 1: einen erfindungsgemäßen Träger für eine Fahrzeugkarosserie ausschnittsweise im Bereich des Stoßes zwischen den beiden Längsabschnitten in einer schematischen Seitenansicht,
- Fig.: 2 diesen Träger in einem Querschnitt nach der Linie II - II der Fig. 1,
- Fig.: 3 eine gegenüber der Fig. 1 um 90° gedrehte Seitenansicht des Trägers und
- Fig.: 4 einen Schnitt durch die Verbindungsnaht entlang der Linie IV - IV der Fig. 1 in einem größeren Maßstab.

### Weg zur Ausführung der Erfindung

Der in den Fig. 1 bis 3 schematisch dargestellte Träger wird durch ein Hohlprofil 1 gebildet, das schematisch mit einem sechseckigen Querschnitt dargestellt ist. Dieses Hohlprofil 1 weist zwei Längsabschnitte 2 und 3 unterschiedlicher Werkstoffe auf. Der Längsabschnitt 2 besteht aus einem Aluminiumwerkstoff, der Längsabschnitt 3 aus einem Eisenwerkstoff.

Das Hohlprofil 1 ist jedoch nicht nur der Länge nach in die zwei Abschnitte 2 und 3 unterteilt, sondern auch aus zwei Blechprofilen 4 und 5 zusammengesetzt, die über Längsrandflansche 6 miteinander verbunden sind, und zwar über Stanznieten 7. Die Stanznieten 7 sind zwar vorteilhaft, aber für die Flanschverbindung nicht zwingend, die beispielsweise auch als Klebeverbindung ausgeführt sein kann.

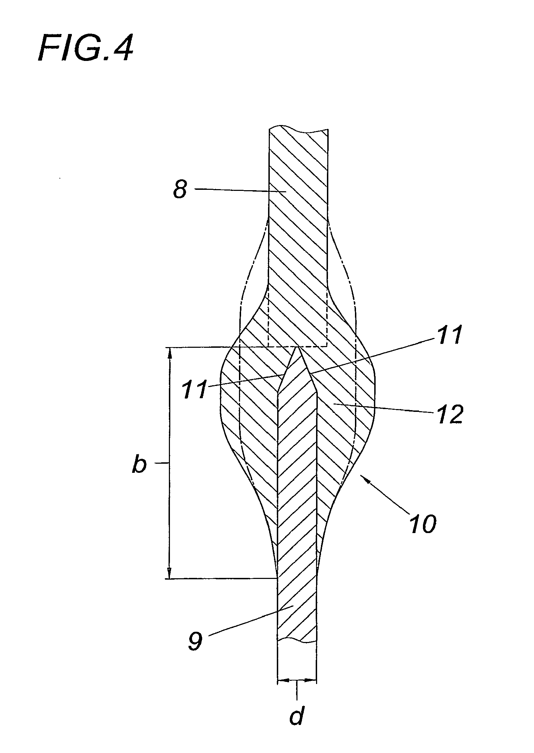

Die Blechprofile 4 und 5 selbst sind jeweils aus zwei Zuschnitten 8 und 9 gefügt, die den Längsabschnitten 2 und 3 des Hohlprofils 1 entsprechen und folglich aus einem Aluminiumwerkstoff bzw. einem Eisenwerkstoff bestehen. Diese stumpfstoßenden Zuschnitte 8 und 9 sind miteinander durch eine Verbindungsnaht 10 stoffschlüssig verbunden. Zu diesem Zweck wird der Zuschnitt 9 aus dem Eisenwerkstoff gemäß der Fig. 4 im Bereich des die Stoßstelle bildenden Randes mit beidseitigen Abschrägungen 11 versehen, die wie die übrigen Flächen des Fügebereiches des Eisenwerkstoffes mit einer Beschichtung vorzugsweise auf Zinkbasis versehen werden. Nach dem Zusammenführen der zu fügenden Zuschnitten 8 und 9 wird im Stoßbereich ein Zusatzwerkstoff 12 auf Aluminiumbasis auf beiden Seiten der Zuschnitte 8 und 9 aufgebracht und mit Hilfe eines Lichtbogens geschmolzen, wobei sich zwischen dem Aluminiumwerkstoff des Zuschnittes 8 und dem die Verbindungsnaht 10 bildenden Zusatzwerkstoff 12 auf Aluminiumbasis eine schmelzmetallurgische Schweißverbindung ergibt. Diese durch ein Aufschmelzen des Aluminiumwerkstoffes erhaltene Schweißverbindung ist durch eine einheitliche Schraffur des Zuschnittes 8 und dem Zusatzwerkstoff 12 veranschaulicht, wobei der ursprüngliche Rand des Zuschnittes 8 strichliert angedeutet wurde. Der schmelzflüssige Zusatzwerkstoff 12 stellt für die Anbindung an den Zuschnitt 9 aus dem Eisenwerkstoff ein Lot dar, das allerdings nicht nur im unmittelbaren Stoßbereich der beiden Zuschnitte 8 und 9 aufgetragen wird, sondern den Stoß überbrückt und den Rand des Zuschnittes 9 aus dem Eisenwerkstoff beidseitig übergreift. Der das Lot bildende Zusatzwerkstoff 12 wird dabei in einem Überdeckungsbereich aufgebracht, der eine wenigstens der dreifachen Dicke d entsprechende Breite b aufweist. Durch die damit verbundene Vergröβerung der Anbindungslänge werden einerseits die für die Belastbarkeit der Verbindungsnaht mitentscheidenden Spannungsniveaus im Bereich der Lötzone auf ein zulässiges Maß beschränkt und anderseits korrosionsbedingte Festigkeitsverluste der Verbindung durch entsprechend lange Korrosionswege unter den korrosionsbedingten Festigkeitsverlusten des schwächeren Grundwerkstoffes der gefügten Zuschnitte 8, 9 gehalten, so daß bei einer geeigneten Behandlung über die gesamte Lebensdauer des Trägers der Fügebereich Festigkeitswerte aufweist, die zumindest den Festigkeitswerten des schwächeren der beiden Zuschnitte 8, 9 entsprechen.

Da die Zuschnitte 8 und 9 im ebenen Zustand vor ihrer Kaltverformung gefügt werden, können die Blechprofile 4, 5 aus den gefügten, ebenen Blechzuschnitten 8, 9 beispielsweise durch ein Biegen oder Tiefziehen als Ganzes umgeformt werden. Die für die plastische Verformung der Zuschnitte 8, 9 erforderlichen Kräfte werden bei diesen Kaltverformungen über die Verbindungsnaht 10 ohne weiteres übertragen. Die Überhöhung durch die Verbindungsnaht 10 kann beim plastischen Umformen der gefügten, zunächst ebenen Zuschnitte 8, 9 durch eine entsprechende Ausbildung der Werkzeuge berücksichtigt werden, die beispielsweise Aussparungen im Bereich der Verbindungsnaht 10 aufweisen. Die Überhöhung kann aber auch z.B. durch eine plastische Verformung abgeflacht werden, wie dies in der Fig. 4 strichpunktiert angedeutet ist.

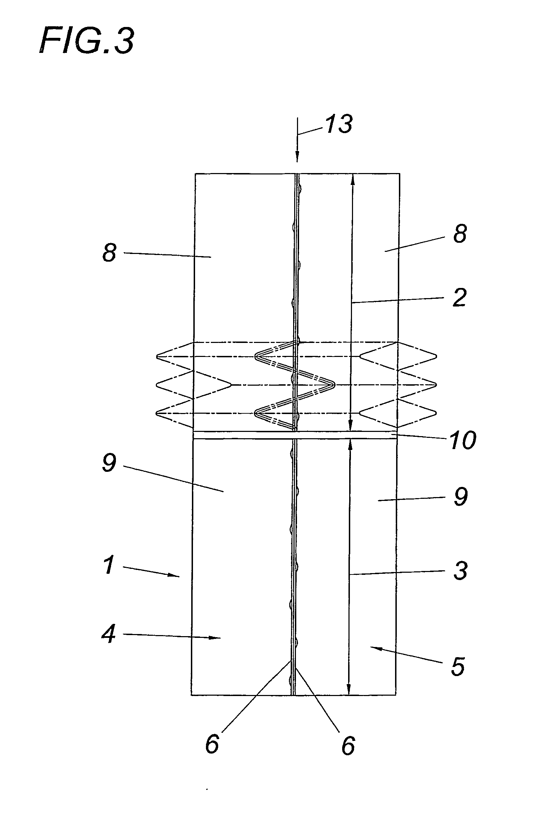

Nach dem Fügen der beiden Blechprofile 4, 5 über deren Längsrandflansche 6 kann der Träger belastet werden, wobei eine Stoßbelastung in Richtung des Pfeiles 13 zu einer Einbeulung des Hohlprofils 1 im Bereich des Längsabschnittes 2 aus dem Aluminiumwerkstoff führt. Die damit verbundene, eine Verkürzung des Trägers bewirkende Faltenbildung ist in der Fig. 3 strichpunktiert angedeutet. Aufgrund der unterschiedlichen Beulfestigkeiten der Längsabschnitte 2 und 3 des Hohlprofils 1 wird bei einer entsprechenden Auslegung dieser Abschnitte erreicht, daß die aufgebrachte Stoßenergie über die Formänderungsarbeit im Bereich des Längsabschnittes 2 aus dem Aluminiumwerkstoff aufgenommen wird, während der Längsabschnitt 3 aus dem Eisenwerkstoff im wesentlichen unverformt bleibt. Die auftretenden Kräfte können über die Verbindungsnaht 10 zwischen den Längsabschnitten 2 und 3 übertragen werden, ohne die zulässige Belastung der Verbindungsnaht 10 zu überschreiten.

## Patentansprüche

1. Träger für eine Fahrzeugkarosserie aus wenigstens zwei entlang ihrer Längsränder zu einem umfangsgeschlossenen Hohlprofil (1) zusammengesetzten Blechprofilen (4, 5), das zumindest zwei durch eine Verbindungsnaht (10) stoffschlüssig miteinander verbundene Längsabschnitte (2, 3) aufweist, **dadurch gekennzeichnet, daß** eine der beiden Längsabschnitte (2, 3) aus einem Eisenwerkstoff und der andere Längsabschnitt (2) des Hohlprofils (1) aus einem Aluminiumwerkstoff bestehen und daß die eine Schweiß-Lötverbindung bildende Verbindungsnaht (10) zwischen den stumpf stoßenden Längsabschnitten (2, 3) des Hohlprofils (1) einen Zusatzwerkstoff (12) auf Aluminiumbasis als Lot aufweist, das auf einer Beschichtung des Eisenwerkstoffes in einer zumindest der dreifachen Dicke (d) dieses Eisenwerkstoffes entsprechenden Breite (b) aufgebracht ist.

2. Träger nach Anspruch 1, **dadurch gekennzeichnet, daß** der Längsabschnitt (3) aus dem Eisenwerkstoff im Stoßbereich zumindest auf einer Seite mit einer Abschrägung (11) versehen ist.

3. Verfahren zum Herstellen eines Trägers für eine Fahrzeugkarosserie nach einem der Ansprüche 1 oder 2, wobei wenigstens zwei Blechprofile aus kaltverformten, ebenen Zuschnitten zu einem umfangsgeschlossenen Hohlprofil gefügt werden, das zwei durch eine Verbindungsnaht stoffschlüssig miteinander verbundene Längsabschnitte aufweist, **dadurch gekennzeichnet, daß** die Blechprofile aus zwei den Längsabschnitten des Hohlprofils entsprechenden Abschnitten einerseits aus einem Eisenwerkstoff und anderseits aus einem Aluminiumwerkstoff bestehen, daß zunächst die ebenen Zuschnitte der Abschnitte aus dem Eisenwerkstoff und dem Aluminiumwerkstoff durch eine Schweiß-Lötverbindung in Form eines stumpfen Stoßes miteinander unter Verwendung eines Zusatzwerkstoffes auf Aluminiumbasis verbunden werden, der zur Ausbildung der Verbindungsnaht auf beiden Seiten des Zuschnittes aus dem Eisenwerkstoff unter einem Schmelzen auf einer Beschichtung des Eisenwerkstoffes in einer zumindest der dreifachen Dicke dieses Zuschnittes entsprechenden Breite aufgebracht wird, bevor die gefügten Zuschnitte zu den Blechprofilen kalt verformt und anschließend die verformten Blechprofile zum Hohlprofil gefügt werden.

4. Verfahren nach Anspruch 3, **dadurch gekennzeichnet, daß** die durch den Zusatzwerkstoff gebildete Verbindungsnaht zwischen den Zuschnitten der Blechprofilabschnitte vor der gemeinsamen Kaltverformung der gefügten Zuschnitte abgeflacht wird.

## Claims

1. Support for a vehicle body comprising at least two sheet metal profiles (4, 5) put together along their longitudinal edges to form a peripherally closed hollow profile (1)) which comprises at least two longitudinal sections (2, 3) joined to each other in a material-locking way by a joint seam (10), **characterised in that** one of the two longitudinal sections (2, 3) consists of an iron material and the other longitudinal section (2) of the hollow profile (1) consists of an aluminium material and **in that** the joint seam (10) forming a weld /solder joint between the butt jointed longitudinal sections (2, 3) of the hollow profile (1) comprises an additional material (12) on an aluminium base as a solder which is applied to a coating of the iron material in a breadth (b) corresponding to at least three times the thickness (3) of this iron material.

2. Support according to claim 1, **characterised in that** the longitudinal section (3) of the iron material is provided in the abutment region at least on one side with a bevelled area (11).

3. Method for producing a support for a vehicle body according to one of the claims 1 or 2, wherein at least two sheet metal profiles of cold-worked, planar cuts are joined to form a peripherally closed hollow profile which comprises two longitudinal sections joined to each other in a material-locking way by a joint seam, **characterised in that** the sheet metal profiles consist of two sections corresponding to the longitudinal sections of the hollow profile, on the one hand being of an iron material and on the other hand being of an aluminium material, **in that** firstly the planar cuts of the sections of the iron material and the aluminium material are joined to each other by a weld / solder joint in the form of a butt joint using an additional material on an aluminium base which, for the formation of the joint seam, is applied to both sides of the cut of the iron material, with fusion on a coating of the iron material, in a breadth corresponding to at least three times the thickness of this cut before the joined cuts are cold-woxked to form the sheet metal profiles and the cold-worked sheet metal profiles are then joined to form the hollow profile.

4. Method according to claim 3, **characterised in that** the joint seam formed by the additional material is levelled between the cuts of the sheet metal profile sections before the cold-working of the joined cuts.

## Revendications

1. Support pour une carrosserie de véhicule, composé d'au moins deux profilés en tôle (4, 5), assemblés le long de leurs bords longitudinaux pour former un profilé creux (1) fermé en périphérie, qui présente au moins deux tronçons de longueur (2,3) reliés ensemble par une liaison par la matière par un cordon de liaison (10), **caractérisé en ce que** l'un des deux tronçons de longueur (2, 3) est composé d'un matériau à base de fer et l'autre tronçon de longueur (2) du profilé creux (1) est composé d'un matériau à base d'aluminium, et **en ce que** le cordon de liaison (10), formant une liaison à soudage par brasage, présente, entre les tronçons de longueur (2, 3) jointoyés bout à bout du profilé creux (1), un matériau additionnel (12) à base d'aluminium, faisant office de matériau de brasure, appliqué sur un revêtement du matériau à base de fer en une largeur (b) correspondant au moins au triple de l'épaisseur (d) de ce matériau à base de fer.

2. Support selon la revendication 1, **caractérisé en ce que** le tronçon de longueur (3) composé du matériau à base de fer est muni, dans la zone de jointoiement, au moins sur un côté, d'un chanfrein (11).

3. Procédé de fabrication d'un support pour une carrosserie de véhicule selon l'une des revendications 1 ou 2, sachant qu'au moins deux profilés en tôle, formés de flans plans formés à froid, sont réunis pour former un profilé creux fermé en périphérie, présentant deux tronçons de longueur, reliés ensemble par une liaison par la matière au moyen d'un cordon de liaison, **caractérisé en ce que** les profilés en tôle sont composés de deux tronçons correspondant aux tronçons de longueur du profilé creux, d'une part, formés d'un matériau à base de fer et, d'autre part, formés d'un matériau à base d'aluminium, et **en ce que** les flans plans des tronçons, formés du matériau à base de fer et du matériau à base d'aluminium, sont d'abord formés ensemble par une liaison à soudure par brasure ayant la forme d'un joint bout à bout, en utilisant un matériau additionnel à base d'aluminium, joint qui, pour former le cordon de liaison est appliqué sur les deux côtés du flan composé du matériau à base de fer, en étant porté à fusion, sur un revêtement du matériau à base de fer, en une largeur correspondant au moins au triple de l'épaisseur de ce flan, avant que les flans jointoyés soient déformés à froid pour produire les profilés en tôle et, ensuite, les profilés en tôle façonnés étant jointoyés pour former le profilé creux.

4. Procédé selon la revendication 3, **caractérisé en ce que** le cordon de liaison, formé par le matériau additionnel, entre les flans des tronçons de profilés en tôle, est aplati avant le formage à froid commun des flans jointoyés.
